# EUROPÄISCHE PATENTANMELDUNG

(11) **EP 0 532 928 A1**
(43) Veröffentlichungstag der Anmeldung: **24.03.1993**
(21) Anmeldenummer: 92114184.2
(22) Anmeldetag: 20.08.1992
(51) Int. Cl.: H04N 7/14

(54) **Anordnung zur Bildkommunikation**

(30) Priorität: 10.09.1991 DE 4129963
(71) Anmelder: Alcatel SEL Aktiengesellschaft, D-70435 Stuttgart (DE); ALCATEL N.V., NL-1077 XX Amsterdam (NL)
(72) Erfinder: Reiber, Hans, W-7000 Stuttgart 80 (DE); Köhler, Günter, W-7312 Kirchheim (DE)
(74) Vertreter: Pohl, Herbert, Dipl.-Ing

(57) **Zusammenfassung**

Die Anordnung besteht aus einer Videokamera (V), einer Bildwiedergabevorrichtung (R), einem teildurchlässigen Spiegel (HS), einer Mattscheibe (M) und je nach Ausführung wenigstens einem undurchlässigen Spiegel (S). Die von der Bildröhre (R) ausgehenden Strahlen werden durch den Spiegel (S) auf den teildurchlässigen Spiegel (HS) reflektiert, der sie zu einem Betrachter (B) umlenkt. Zwischen Spiegel (HS) und Betrachter (B) stimmt die optische Achse (A) der Strahlen der Bildröhre mit der der hinter dem Spiegel (HS) angebrachten Videokamera (V) überein. Die Mattscheibe (M) ist im Strahlengang der Bildröhre (R) vor dem teildurchlässigen Spiegel (HS) angeordnet. Die Anordnung kann in einem Tisch oder in einem Standgehäuse (H) untergebracht sein. Mit ihr läßt sich ein großes Bild mit hoher Bildauflösung erzeugen.

## Beschreibung

Die Erfindung betrifft ein Anordnung zur Bildkommunikation nach dem Oberbegriff des Anspruchs 1.

Eine derartige Anordnung ist aus der DE 34 31 902 A1 bekannt. Sie weist eine Videokamera und ein Bildwiedergabegerät, z.B. eine Bildröhre auf, deren optische Achsen durch Spiegel in Bezug auf einen Betrachter zusammen geführt werden. Dies geschieht, indem zwischen Videokamera und Betrachter im Gerät ein halb- oder teildurchlässiger Spiegel angebracht ist, an den die von der Bildröhre kommenden Strahlen in Richtung zum Betrachter reflektiert werden, so daß von da an der Strahlengang mit dem der Videokamera zusammen fällt. Letztere, empfängt die vom Betrachter kommenden Strahlen, soweit sie den teildurchlässigen Spiegel durchdringen. Je nach Ausführung genügt dieser eine Spiegel, sofern die Videokamera und Bildröhre so im Gerät eingebaut sind, daß ihre optischen Achsen senkrecht zueinander stehen. Andernfalls ist ein zweiter, undurchlässiger Spiegel erforderlich, der die Strahlen der Bildröhre zum teildurchlässigen reflektiert.

Der Erfindung liegt die Aufgabe zugrunde, eine kostengünstige Anordnung der eingangs genannten Art mit besonders großer Bildfläche von etwa einem Meter Diagonale und hoher Bildauflösung zu schaffen. Gelöst wird diese Aufgabe durch die im Anspruch 1 angegebenen Merkmale. Weiterbildungen sind den Unteransprüchen zu entnehmen. Die angegebene Lösung hat den Vorteil, daß ein Gerät mit großem Bild bei relativ niedrigen Kosten hergestellt werden kann. Demgegenüber wäre eine Bildröhre mit einem Meter Bilddiagonale erheblich teurer. Außerdem wäre eine ergonomisch nicht vertretbare große Bauhöhe und ein höheres Gesamtgewicht die Folge, da hochauflösende Bildröhren nur mit geringem Ablenkwinkel realisierbar sind.

Die Erfindung wird an Ausführungsbeispielen beschrieben, die in den zugehörigen Zeichnungen dargestellt sind. Darin zeigen
- Fig. 1: eine Anordnung zur Bildkommunikation in einem Tisch mit eingebauten Spiegeln, einer Videokamera und einer Bildwiedergabevorrichtung mit drei Farbbildröhren, in perspektivischer Ansicht;
- Fig. 2: eine andere Ausführung einer derartigen Anordnung in Tischform, in schematischer Seitenansicht;
- Fig. 3: eine weitere Ausführung einer derartigen Anordnung als Standgerät, in schematischer Seitenansicht;
- Fig. 4: eine andere Ausführung einer als Standgerät ausgebildeten, derartigen Anordnung, in schematischer Seitenansicht.

Bei den in den Figuren dargestellten Ausführungen von Anordnungen zur Bildkommunikation handelt es sich um sogenannte Multi-Media Terminals mit großer Bildfläche der Bildwiedergabevorrichtung und hoher Bildauflösung, d.h., die Bildfläche hat eine Diagonale von z.B. einem Meter Länge und eine Bildpunktdichte von 1.200 mal 1.600 Pixels oder mehr. Das in der DE 34 31 902 A1 beschriebene Prinzip der Strahlenführung von Videokamera, Bildwiedergabevorrichtung oder Bildröhre und teildurchlässigem Spiegel wird beibehalten, doch wird zwischen Bildröhre und Spiegel eine Mattscheibe M zur Erzeugung eines projizierten, reellen Bildes eingefügt und die Bildvergrößerung durch ein optisches System und, wenn nötig, durch wenigstens einen weiteren Umlenkspiegel im Strahlengang der Bildröhre erreicht. Das Farbbild wird von drei kleinen monochromatischen Projektionsbildröhren mit den Leuchtstoff-Farben rot, grün, blau über drei optische Linsensysteme und einen oder mehrere Umlenkspiegel bei einer Vergrößerung von etwa 1 : 10 auf die Mattscheibe projiziert. Anstelle von drei Optiksystemen kann auch ein integriertes Optiksystem mit optischem Combiner (bestehend aus Prismen oder Spiegeln) zur Zusammenführung der drei Teilbilder verwendet werden. Auch die Anwendung einer einzigen Farbbild-Projektionsröhre und einer einzigen Optik ist möglich. Die parallaxefreie Bildkommunikation wird durch die hinter dem teildurchlässigen Spiegel angebrachte Videokamera ermöglicht.

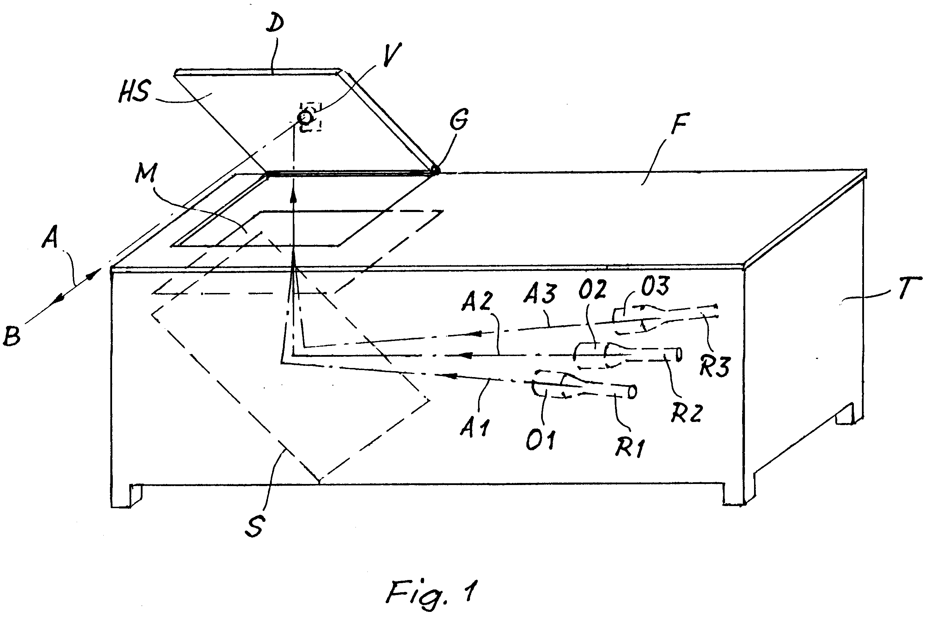

Bei der Ausführung nach Fig. 1 ist die Anordnung in einem Tisch T untergebracht. Das Farbbild wird von den drei nebeneinander liegenden Projektions-Bildröhren R1, R2 und R3 durch je ein optisches Linsensystem 01, 02, 03 auf einen Spiegel S projiziert, wobei die optischen Achsen A1, A2, A3 der Bildröhren auf die Mitte des Spiegels gerichtet sind. Dort werden die drei Strahlengänge in die Vertikale umgelenkt und auf einer Mattscheibe M vereinigt, die in oder unter der Tischfläche F angebracht ist. Von da fällt der Strahlengang auf einen weiteren, teildurchlässigen Spiegel HS, von wo er schließlich zum Betrachter B reflektiert wird. Hinter diesem Spiegel HS ist außerdem die Videokamera V so angebracht, daß ihre optische Achse A durch den Spiegel HS hindurch auf den Betrachter B gerichtet ist. Ihr Strahlengang fällt mit dem von Spiegel HS reflektierten Strahlengang der Bildröhren zusammen. Der Spiegel HS ist wenigstens im Bereich des Kameraobjektivs teildurchlässig.

Der Tisch T ist rechteckig bzw. quaderförmig und die optische Einrichtung ist unter Nutzung seiner Länge so eingebaut, daß die Bildröhren R1 bis R3 nahe dem einen Ende, der Spiegel S nahe dem anderen Ende angebracht sind. Der zweite Spiegel HS kann starr oder auf der Innenseite eines schwenkbaren Deckels D befestigt sein. Bei der Ausführung nach Fig. 1 ist der Deckel an der hinteren Längskante des Tisches T bei G angelenkt, der Betrachter B sitzt vor der vorderen Längsseite. Die Spiegelebenen stehen dementsprechend zueinander 90° um die Vertikale gedreht.

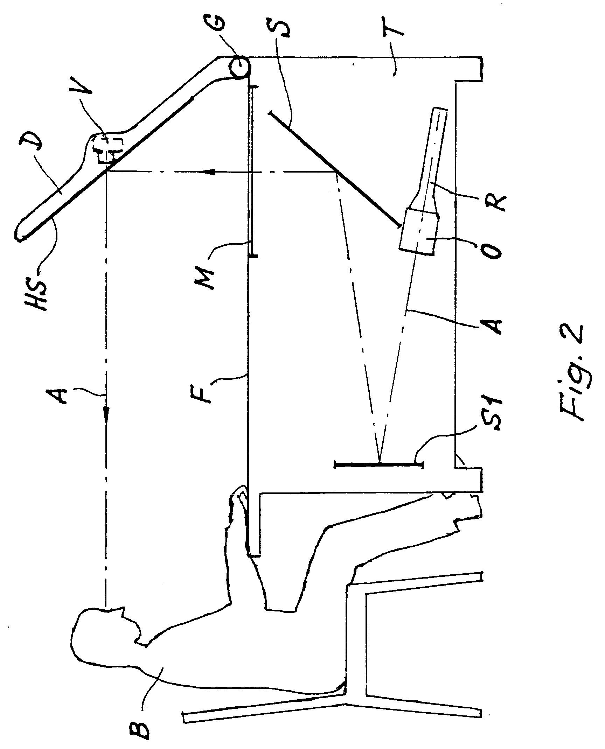

Die Ausführung nach Fig. 2 unterscheidet sich von der vorgenannten dadurch, daß der Deckel mit Spiegel HS und Videokamera V an der einen Querseite des Tisches T durch ein Gelenk G mit diesem verbunden ist. Der Betrachter B sitzt dann an der gegenüberliegenden Querseite. Ferner ist oder sind die Bildröhre(n) R unter dem Spiegel S angeordnet, der den Strahlengang in die Vertikale umlenkt. Die optische(n) Achse(n) der Bildröhre(n) R ist/sind auf die Betrachterseite gerichtet. Dort ist ein weiterer Spiegel S1 im Tisch eingesetzt, der den Strahlengang zum Spiegel S zurückwirft.

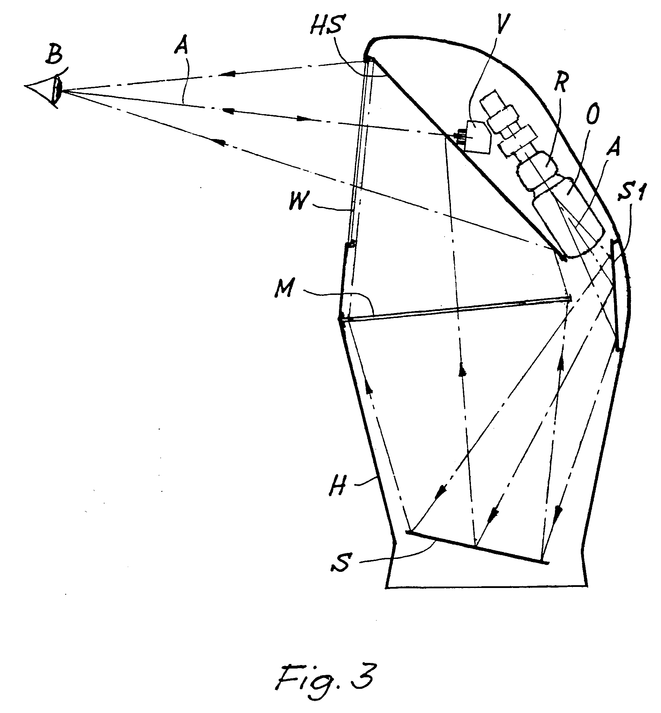

In Fig. 3 ist eine Ausführung mit einem Standgehäuse H abgebildet, bei dem die Mattscheibe M etwa in halber Höhe und annähernd horizontal angeordnet ist, während der Spiegel S leicht geneigt in Bodennähe sitzt. Der teildurchlässige Spiegel HS ist im oberen Teil des Standgehäuses H geneigt befestigt. Von ihm wird das auf der Mattscheibe M erscheinende Bild durch ein Fenster W im Standgehäuse nach außen zum Betrachter B reflektiert.

Im Raum hinter dem teildurchlässigen Spiegel HS ist die Videokamera V und die Bildröhre R untergebracht. Die Videokamera ist so eingebaut, daß ihre optische Achse A auf den Betrachter gerichtet ist. Sie fällt nach Durchdringen des teildurchlässigen Spiegels HS mit der des von diesem Spiegel zum Betrachter B reflektierten Strahlengangs der Bildröhre R zusammen. Letztere ist abwärts gerichtet eingebaut. Da es die Raumverhältnisse nicht zulassen, ihre optische Achse A direkt auf den Spiegel S am Boden des Standgehäuses auszurichten, ist ein weiterer Umlenkspiegel S1 an der Rückwand des Standgehäuses H angebracht, der die Stahlen dorthin reflektiert.

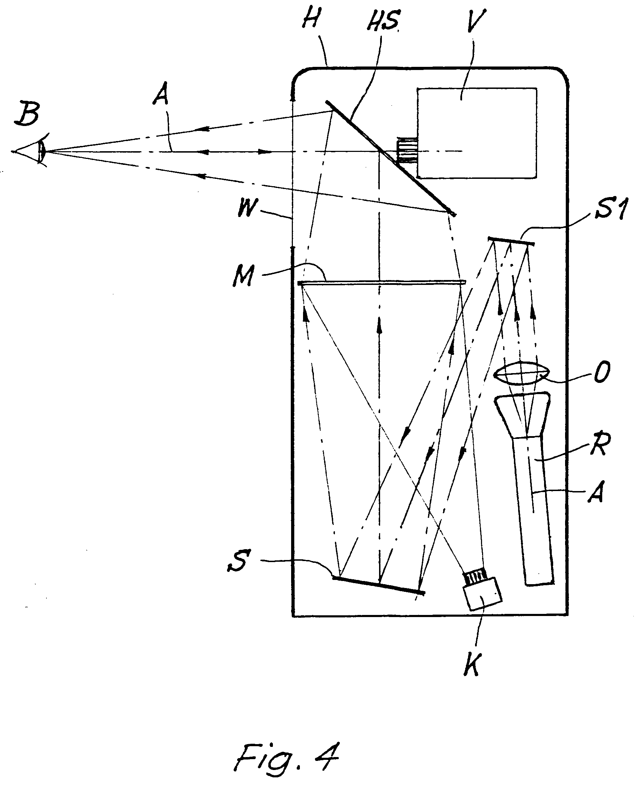

Fig. 4 zeigt eine Variante einer Anordnung mit Standgehäuse H, die ähnlich wie die zuvor geschilderte aufgebaut ist. Die Videokamera V sitzt wieder so hinter dem teildurchlässigen Spiegel HS, daß ihre optische Achse A direkt durch diesen Spiegel hindurch auf einen Betrachter B gerichtet ist und sich mit der des vom Spiegel HS reflektierten Strahlengangs der Bildröhre R deckt. Die Bildröhre R ist bei dieser Ausführung neben dem Spiegel S nahe dem Gehäuseboden so montiert, daß ihre optische Achse A nach oben gerichtet ist. Dort ist unterhalb der Videokamera V ein Umlenkspiegel S1 angebracht, der die Strahlen auf den Spiegel S reflektiert, von wo sie zur Mattscheibe M und zum teildurchlässigen Spiegel HS umgelenkt wird.

Außerdem ist neben dem Spiegel S nahe dem Boden eine handelübliche, monochromatische CCD-Kamera K angebracht, die auf die Mattscheibe M gerichtet ist und zur automatischen Konvergenzeinstellung dient. Die Kamera K stellt einen Bildsensor dar, dessen Signale über einen A/D-Wandler einer digitalen Signalverarbeitung zugeführt werden, welche die Regelung der Konvergenz durchführt. Eine solche Vorrichtung ist in der DE 39 20 965 A1 beschrieben.

Zur Erzielung besonders großer, visuell empfundener Bildhelligkeiten und Kontraste kann anstelle der Mattscheibe M ein Linsenraster-Bildschirm (Lenticular Screen) verwendet werden. Ein solcher Schirm bündelt das Licht, so daß es dann besonders hell erscheint, wenn das virtuelle Bild senkrecht zur Mitte betrachtet wird. Die empfundene Helligkeit nimmt jedoch ab, je mehr der Betrachungswinkel vom Lot abweicht. Eine abnehmende Bildhelligkeit zu den Seiten bzw. Ecken des Bildes hin wird auch durch die Bildröhren verursacht. Zur Kompensation dieser Nachteile wird vorgeschlagen, den teildurchlässigen Spiegel HS nur im Bereich des Strahlenganges der Kamera teildurchlässig zu machen und die Lichtdurchlässigkeit nach außen hin abnehmen zu lassen. Der Reflexionsfaktor nimmt dann nach außen hin zu und somit auch die Helligkeit.

## Patentansprüche

1. Anordnung zur Bildkommunikation, mit einer Videokamera, einer Bildwiedergabevorrichtung und einem im Strahlengang zwischen der Videokamera und einem Betrachter liegenden, teildurchlässigen Spiegel, durch den die von der Bildwiedergabevorrichtung kommenden Strahlen derart umgelenkt werden, daß ihre Richtung mit der des Strahlengangs zwischen Videokamera und Betrachter übereinstimmt, **dadurch gekennzeichnet,** daß zwischen Bildwiedergabevorrichtung (R) und teildurchlässigem Spiegel (HS) eine Mattscheibe (M) eingesetzt ist, auf der durch Projektion ein reelles Bild erzeugt wird.

2. Anordnung nach Anspruch 1, dadurch gekennzeichnet, daß die Bildwiedergabevorrichtung von drei nebeneinander angeordneten, monochromatischen Projektionsbildröhren (R1, R2, R3) mit den Leuchtstoff-Farben rot, grün und blau sowie zugehörigen optischen Linsensystemen (01, 02, 03) gebildet wird.

3. Anordnung nach Anspruch 1, dadurch gekennzeichnet, daß die Bildwiedergabevorrichtung von einem integrierten Optiksystem mit optischem Combiner gebildet wird.

4. Anordnung nach Anspruch 1, dadurch gekennzeichnet, daß anstelle der Mattscheibe (M) ein Linsenraster-Bildschirm eingesetzt ist.

5. Anordnung nach einem der vorhergehenden Ansprüche, dadurch gekennzeichnet, daß der teildurchlässige Spiegel (HS) nur im Bereich des Strahlenganges der Videokamera (V) teildurchlässig ist und die Durchlässigkeit gegen den Rand des Spiegels (HS) abnimmt.

6. Anordnung nach einem der vorhergehenden Ansprüche, dadurch gekennzeichnet, daß in den Strahlengang zwischen Bildwiedergabevorrichtung (R) und Mattscheibe (M) mindestens ein undurchlässiger Spiegel (S, S1) zur Umlenkung der Strahlen eingefügt ist.
